# EUROPEAN PATENT APPLICATION

(11) **EP 0 685 165 A1**
(43) Date of publication of application: **06.12.1995**
(21) Application number: 94203402.6
(22) Date of filing: 23.11.1994
(51) Int. Cl.: A21D 13/00

(54) **A filling for savoury snacks and a method for its manufacture**

(30) Priority: 30.05.1994 IT MI941105
(71) Applicant: BARILLA G. e R. F.lli - Società per Azioni, I-43100 Parma (IT)
(72) Inventor: Albricci, Franco, I-43100 Parma (IT)
(74) Representative: Vannini, Torquato

(57) **Abstract**

A creamy filling for savoury snacks is described which comprises one or more organoleptically characterising ingredients in the freeze-dried state dispersed and amalgamated in an edible-oil- and fat-based matrix and having a moisture content of no more than 2.5% by weight of the total weight of the filling. A method for the preparation of this filling is also described. The savoury snacks prepared with this filling have very good organoleptic properties which remain unchanged over a period of at least three months at ambient temperature.

## Description

The present invention relates generally to baked products of the "snack" type.

It is known that there are two basic types of snack commercially available; sweet snacks and savoury snacks.

The first are commonly known as "merende", or "tea time snacks", and generally contain a sweet, creamy filling, such as preserve, chocolate- or vanilla-flavoured cream and the like. These snacks usually have a shelf life of several weeks or months at ambient temperature.

Savoury snacks may be divided into two categories of product, more precisely snacks which will keep at ambient temperature for a period equivalent to that indicated above for sweet, tea-time snacks and snacks intended to be eaten within several days. A typical example of this latter type of product is the so called savoury sandwich which contains a filling of a creamy consistency including, in addition to a fat base, one or more organoleptically characterising ingredients such as cheese, charcuterie, tuna, olives, tomatoes etc. These products have organoleptic properties which are generally liked but have the disadvantage of keeping for only limited periods of time even when they are kept strictly at the temperature of a refrigerator during the entire period between production and consumption.

Savoury snacks having a comparable shelf life at ambient temperature which are currently available on the market are products without fillings, such as "focaccine" and "schiacciatine" etc, which, although having pleasing organoleptic properties, cannot be compared with the sandwiches mentioned above as regards their capacity to attract consumers.

The object of the present invention is to provide a savoury snack with a filling of creamy consistency which is able to compete with conventional sandwiches in terms of its desirability and which can be kept at ambient temperatures without its organoleptic characteristics deteriorating and without its going bad.

The deterioration of sandwich-type snacks is due particularly to the high moisture content of the creamy fillings which enables microbes to proliferate and the fats contained therein to go rancid.

Consequently, in order to avoid rapid deterioration of such snacks it would be necessary to control their percentage moisture content, and particularly that of their creamy filling, accurately.

The moisture contents which must be reached to ensure that such snacks keep at ambient temperatures are, however, such as to require thorough dehydration of the creamy filling which, if carried out by the usual methods (in rotary drum driers, spray driers etc) would give rise to unacceptable changes in the organoleptic properties of the filling, as well as in its rheological properties, since a large proportion of the volatile components responsible for the aroma are lost in the heat treatment and the filling looses its creamy consistency, tending to powder.

As an alternative to the dehydration treatments mentioned above, freeze-drying may be used; if a creamy filling for savoury snacks is freeze-dried, however, the changes in its organoleptic properties are certainly limited but unsatisfactory rheological characteristics are always obtained. Moreover such a treatment would be difficult to envisage on an industrial scale because of the high costs involved.

The problem at the basis of the present invention is thus to provide a creamy filling for savoury snacks which can be kept for a period of not less than three months at ambient temperatures and a method for the manufacture of such a filling.

The idea which has led to the solution of the problem set out above is that of controlling the moisture content of the creamy filling by dehydrating only the organoleptically characterising components of the filling by freeze drying and subsequently incorporating them in a substantially anhydrous lipidic base.

The problem at the root of the present invention is thus resolved by a creamy filling for the preparation of savoury snacks, characterised in that it includes one or more organoleptically characterising ingredients in the freeze-dried state, finely dispersed and amalgamated in an edible-fat- and oil-based matrix, and in that it has a moisture content of no more than 3% by weight of the total weight of the filling.

The term "edible fats" is intended to mean edible fatty substances which have a solid or doughy consistency at ambient temperature (20°-25°C) and the term "edible oils" is intended to mean edible fatty substances which are liquid at ambient temperature (20°-25°C).

The freeze-dried organoleptically characterising ingredients are preferably selected from the group comprising meats, fish, cheeses, eggs, charcuterie, greens and vegetables.

The edible oils in the matrix preferably constitute 20%-50% by weight of the total lipid content of the filling.

The edible fats in the matrix preferably constitute 25%-55% by weight of the total fat content of the filling.

Edible fats and oils which are particularly useful for the purposes of the present invention are those selected from the group comprising butter, vegetable margarine, palm oil, olive oil, sunflower oil, corn oil, and oils from peanuts and soya beans.

The said edible fats preferably melt within the range of between 32 and 39°C and have a solid/liquid ratio of 45 +/- 5% at 10°C, 25 +/- 5% at 20°C, 10 +/- 2% at 30°C and 5 +/- 2% at 35°c. These ratios are determined by pulsed nuclear magnetic resonance.

The total lipid content of the filling of the present invention is preferably between 35% and 50% by weight of the total weight of the filling. This lipid content includes the lipids naturally present in the organoleptically characterising ingredients and the edible oils and fats of the matrix in which these ingredients are dispersed.

The choice of the edible oils and fats must aim at obtaining the best result from the rheological point of view as well as from the organoleptic and nutritional points of view.

The quantity of edible oils and fats contained in the matrix is such as to constitute 15-40% by weight of the total weight of the filling.

The total content of organoleptically characterising ingredients in the freeze-dried state is preferably between 20 and 40% by weight of the total weight of the filling.

Naturally it is possible to incorporate other ingredients of nutritional value in the edible-fat based matrix as long as these have a sufficiently low moisture content not to exceed the total moisture content of the filling as indicated above.

Commercial baked products including the said filling also fall within the present invention.

The invention further includes a method for the preparation of the said filling which includes the successive steps of:
- freeze-drying one or more organoleptically characterising ingredients,
- mixing the one or more freeze-dried ingredients with edible fats and oils to obtain a uniform mixture.

Generally the mixing step is carried out over about ten minutes.

To advantage the steps listed above are followed by the successive steps of:
- milling the mixture between rollers to obtain a paste having a grain size of less than 80 µ,
- whipping the paste by mechanical means to obtain a filling with a creamy and velvety consistency.

Preferably the milling of the mixture is carried out by two passages through a three-roller mill.

The final whipping step reduces the specific gravity of the filling by about 15%.

The temperature at which the various steps of the method described above are carried out is preferably between 20 and 28°c.

In the method explained above, the edible oils and fats are preferably used in quantities such as to bring the total lipid content of the filling to a value of between 35% and 50% by weight of the total weight of the filling and the organoleptically characterising ingredients preferably constitute from 20-40% by weight of the total weight of the filling.

Surprisingly it is found that the step in which the mixture of edible fats and freeze-dried organoleptically characterising ingredients is milled in a roller mill, followed by whipping of the paste thus obtained, leads to a final product having a creamy, velvety consistency notwithstanding the fact that phase inversion occurs in the mixture in the milling step. In fact, while the initial mixture of edible fats and freeze-dried ingredients is constituted essentially by a dispersion of solid particles in a continuous lipid phase, the paste leaving the milling rollers is constituted by a dispersion of lipids in a continuous solid phase. Despite this, it is possible to whip the paste and reach the desired creamy, velvety consistency although whipping is generally applied to dispersions having a continuous aqueous or fat phase.

The phase inversion has the advantage, inter alia, of giving a product which is less sensitive to high temperatures and in which the fatty component has little likelihood of liquifying and separating from the other ingredients.

Two examples of the preparation of a filling for snacks according to the invention on an industrial scale will now be provided in which all the parts expressed are parts by weight.

### EXAMPLE 1

16 parts of margarine, 6 parts of olive oil, 32 parts of freeze-dried tuna in olive oil having a moisture content of less than 2%, 8 parts of potato granules with a moisture content of less than 6%, 25 parts of skimmed milk powder with a moisture content of less than 5%, 8 parts of freeze-dried mozzarella cheese having a moisture content of less than 2% and 5 parts of freeze-dried egg yolk with a moisture content of less than 2% were mixed for ten minutes in a planetary mixer to obtain a uniform mixture.

This mixture was then milled by two passages through a three-roller mill and a paste was obtained with a grain size of less than 80 µ.

This paste was then subjected to further mixing in a mixer having a paddle wheel whisk with thin wires for five minutes.

After this period, the paste was found to have been converted into a soft, thick cream with a total lipid content of 42% by weight of the total weight of the cream. The cream was used as a filling in the preparation of savoury puff-pastry snacks.

These snacks were wrapped in a paper/aluminium/polythene film and subjected to tests to determine their keeping qualities at ambient temperature (25°C) for three months.

At the end of this period the microbiological parameters were evaluated and were found to be entirely satisfactory.

Also an organoleptic test did not reveal any substantial differences compared with the freshly prepared product.

### EXAMPLE 2

16 parts of margarine, 13 parts of olive oil, 35 parts of skimmed milk powder with a moisture content of less than 5%, 17 parts of freeze-dried Emmenthal cheese with a moisture content of less than 2%, 12 parts of freeze-dried Parmesan cheese with a moisture content of less than 2%, two parts of freeze-dried gorgonzola cheese with a moisture content of less than 2% and 5 parts of freeze-dried ricotta cheese with a moisture content of less than 2% were mixed for ten minutes in the same apparatus as in the previous example until a homogenous mixture was obtained.

This mixture was subjected to the same treatments as described in Example 1, under the same experimental and operative conditions.

A cheesy cream was thus obtained having a total lipid content of 46% by weight of the total weight of the cream and with rheological properties similar to those of the previous example and this was used to fill savoury puff-pastry snacks which, when subjected to the keeping test described in Example 1, gave similar favourable results.

The creamy filling for savoury snacks according to the invention is not only an effective solution to the problem explained above for providing savoury snacks which will keep at ambient temperature for at least three months but also has organoleptic properties equivalent to those of a freshly-prepared filling. This is primarily due to the fact that its ingredients which have the more marked organoleptic properties are present in the freeze-dried form.

In fact by virtue of the immediate rehydration of the freeze-dried ingredients incorporated in the creamy filling of the invention at the moment of consumption and the retention of the volatile components responsible for the aroma, a taste is perceived which is very close to that obtainable with a filling prepared from fresh ingredients which have not been dehydrated.

Finally it is worth stressing that the filling of the invention has a thick creamy consistency and this consistency remains unchanged during the entire period of time for which it will keep.

## Claims

1. A filling of creamy consistency for the preparation of savoury snacks characterised in that it includes one or more organoleptically characterising ingredients in the freeze-dried state finely dispersed and amalgamated in an edible-fat- and oil- based matrix, and in that it has a moisture content of no more than 3% by weight of the total weight of the filling.

2. A filling according to Claim 1, characterised in that the one or more organoleptically characterising ingredients in the freeze-dried state are included in quantities variable from 20 to 40% by weight of the total weight of the filling.

3. A filling according to Claim 2, characterised in that its total lipid content is variable from 35 to 50% by weight of the total weight of the filling.

4. A filling according to Claim 3, characterised in that the edible oils in the matrix constitute from 20% to 50% by weight of the total lipid content of the filling.

5. A filling according to Claim 4, characterised in that the edible fats in the matrix constitute 25% to 55% by weight of the total fat content of the filling.

6. A filling according to Claim 5, characterised in that the freeze-dried organoleptically characterising ingredients are selected from the group comprising meats, fish, cheeses, eggs, charcuterie, vegetables and greens.

7. A filling according to Claim 5, characterised in that the edible fats have a melting point between 32 and 39°C and a ratio between the solid fraction and the liquid fraction at ambient temperature of 25 +/- 5%.

8. A filling according to Claim 7, characterised in that the edible fats and oils are constituted by one or more components selected from the group comprising butter, vegetable margarines, palm oil, olive oil, corn oil, sunflower oil, oils from peanuts and soya beans.

9. A method for the preparation of a creamy filling for savoury snacks having a moisture content of no more than 3%, which includes the successive steps of:
- freeze-drying one or more organoleptically characterising ingredients,
- mixing the one or more freeze-dried ingredients with edible fats and oils to obtain a uniform mixture.

10. A method according to Claim 9, characterised in that it further includes the successive steps of:
- milling the mixture between rollers to obtain a paste having a grain size of less than 80 µ,
- whipping the paste by mechanical means to obtain a filling with a creamy, velvety consistency.

11. A method according to Claim 10, characterised in that the edible fats and oils are used in quantities such as to bring the total lipid content of the filling to a value of between 35% and 50% by weight of the total weight of the filling and in that the organoleptically characterising ingredients constitute 20 to 40% by weight of the total weight of the filling.

12. A commercial baked product characterised in that it includes a savoury filling according to any one of Claims 1 to 8.
